# DEMANDE DE BREVET EUROPEEN

(11) **EP 1 484 357 A1**
(43) Date de publication de la demande: **08.12.2004**
(21) Numéro de dépôt: 03076761.0
(22) Date de dépôt: 06.06.2003
(51) Int. Cl.: C08J 9/00, C08J 9/10, C08J 9/12, C08K 3/34, C08G 77/445, C01B 33/44

(54) **Procédé de préparation de mousses de polyester biodégradables, mousses de polyester telles qu'ainsi obtenues et leur utilisation, et procédé de modification de nanocharges**

(71) Demandeur: Université de Liège, 4020 Liège (BE)
(72) Inventeur: Stassin, Fabrice, Université de Liège, 4000 Liège (BE)

(57) **Abrégé**

Procédé de préparation d'une mousse de polyester biodégradable comprenant le mélange du polyester sous forme de masse fondue avec une nanocharge du type argile organomodifiée et la dispersion de celle-ci dans la masse fondue de polyester puis expansion de la mousse de polyester ainsi obtenue en présence d'un agent moussant de manière à former de la mousse de polyester. On ajoute à la masse fondue de polyester, un surfactant siliconé conférant à la mousse une morphologie poreuse fine, régulière et régulable.

Et procédé de modification d'une argile non modifiée, en particulier d'une argile du type montmorillonite, comprenant le mélange de l'argile avec un organomodifiant choisi parmi les sels d'ammonium quaternaire, les sels de sulfonium, les sels de phosphonium, les sels d'ammonium siliconé, les sels d'ammonium hautement fluoré, les précurseurs desdits sels et les mélanges d'au moins deux desdits sels, en présence de dioxyde de carbone (CO₂) sous pression.

## Description

La présente invention est relative à un procédé de préparation de mousses de polyester biodégradable, aux mousses de polyester telles qu'ainsi obtenues ainsi qu'à leur utilisation.

L'invention a également pour objet un procédé de modification de nanocharges, et en particulier d'argiles non modifiées du type montmorillonite.

Les mousses de polyester biodégradable et biocompatible présentent des avantages d'ordre économique, environnemental et technologique indéniables, et pourraient avantageusement remplacer les mousses de polyuréthanne ou polystyrène pour des applications de commodité telles que revêtements, emballages, pots de transplantation en agriculture et analogue, ou de spécialité telles qu'implants médicaux biorésorbables, éléments d'ingénierie tissulaire et analogue.

Traditionnellement, pour fabriquer une mousse thermoplastique, un agent moussant est dissous ou mélangé dans le polymère, cet agent moussant pouvant être un agent physique, tel qu'un gaz inerte du type CO₂, N₂, ou chimique sous forme d'un additif tel que l'azodicarbonamide qui par réaction génère un gaz (N₂) dans le système. Le moussage résulte alors de l'expansion de l'agent moussant au sein de la matrice thermoplastique fondue. Il en résulte une importante déformation biaxiale de cette dernière qui, rapidement, formera de fines parois délimitant les cellules contenant le gaz. Le système à deux phases, gaz et polymère, ainsi généré est ensuite stabilisé par refroidissement et/ou cristallisation du polymère. Si la résistance à l'élongation du polymère, directement dépendante de la viscosité élongationnelle, n'est pas suffisante, le polymère fondu sera incapable de retenir le gaz expansé dans des cellules fermées et celles-ci finiront par coalescer via une rupture des parois cellulaires ou s'effondrer. Des matières thermoplastiques, comme les polyesters biodégradables, sont incapables de former une mousse stable en raison d'une rigidité à l'état fondu trop faible. On connaît par ailleurs de manière qualitative les paramètres structuraux qui permettent d'augmenter cette rigidité, tels que la masse moléculaire, le degré de branchement ou de réticulation. Dès lors, en plus de l'additif moussant, des agents chimiques précurseurs d'une réticulation (peroxydes) ou d'un greffage (agent de couplage) des chaînes polymères sont ajoutés dans le polymère fondu, en vue de modifier chimiquement sa structure et d'ajuster ainsi sa viscosité élongationnelle au moussage. Ces procédés, quoi que largement répandus, présentent de nombreux inconvénients, à savoir :
- les agents chimiques généralement utilisés tels que anhydrides, peroxydes sont toxiques et/ou présentent peu de sécurité d'emploi;
- l'optimisation du procédé de modification chimique (réticulation) des polymères dépend de facteurs cinétiques tels que la vitesse des réactions et est donc très aléatoire;
- en modifiant la structure des chaînes macromoléculaires, les propriétés physiques du polymère peuvent être altérées. A titre d'exemple, à un degré élevé de réticulation, la matrice polymère devient infusible et insoluble, ce qui rend très difficile la mise en oeuvre d'après-moussage du matériau et son recyclage éventuel.

D'autres procédés, basés sur l'utilisation de rayonnements gamma ou de faisceaux d'électrons, peuvent être mis à profit pour réticuler avant moussage le polymère et ainsi ajuster sa viscosité élongationnelle. Toutefois, l'équipement nécessaire à la réalisation de tels procédés est extrêmement coûteux.

D'autres additifs sont généralement utilisés, tels que des additifs nucléants (talc, stéarate de calcium, silice) qui facilitent la nucléation des bulles de la mousse et permettent de contrôler leur distribution, ou encore des agents chimiques utilisés pour accélérer la décomposition des agents de moussage chimiques.

Après le moussage, le gaz d'expansion peut diffuser hors des cellules avec un risque de déformation de la structure cellulaire et d'instabilité dimensionnelle du matériau expansé. Inversement, les gaz de l'atmosphère peuvent diffuser dans la mousse et conduire à l'extrême à une rupture des parois cellulaires. Des agents sensés améliorer les propriétés de barrière aux gaz de la matrice polymère sont donc généralement aussi ajoutés aux formulations de mousse. Ces additifs sont d'une manière générale des amides et esters d'acides gras, des amines aliphatiques de haut poids moléculaire, des copolymères d'éthylène et d'acide carboxylique insaturé.

Par conséquent, compte tenu du nombre élevé d'additifs mis en jeu et de leurs éventuelles interactions, les procédés de moussage actuels sont généralement complexes et difficiles à optimiser. De plus, un ou plusieurs composants des formulations de moussage sont toxiques et/ou présentent peu de sécurité à l'utilisation.

Il est également connu d'utiliser des nanocharges du type argile silicatée multicouche pour améliorer les propriétés mécaniques, thermiques et de barrière aux gaz des polymères et notamment des polyesters biodégradables. Des nanocomposites à base des polymères les plus courants ont été étudiés, voire développés à un stade industriel. Toutefois, l'extension de ce concept aux mousses de polymère n'a rencontré jusqu'ici qu'un intérêt très limité. Les fonctions de la nanocharge sont notamment de promouvoir la nucléation des cellules, d'augmenter le rendement de l'expansion (perte de gaz limitée) et d'améliorer les propriétés barrières et mécaniques du matériau final. Le rôle de la nanocharge dans le contrôle de la vitesse élongationnelle du polymère a également été mentionné. En fait, l'exfoliation, au moins partielle, d'une nanocharge du type argile silicaté multicouche au sein de la matrice de polymère permet d'augmenter sa viscosité élongationnelle. Cette propriété est critique pour la stabilisation de la structure cellulaire de la mousse. Bien que l'utilisation d'un nanocomposite physique du type polymère/nanocharge présente de nombreux avantages par rapport aux voies classiques de modification chimique du polymère telles qu'une recyclabilité, amélioration des propriétés barrières du matériau et de sa résistance à la thermooxydation, non-toxicité, sécurité d'emploi, l'incorporation de la nanocharge en tant que telle ne conduit pas à une mousse de structure fine et contrôlée.

Un des buts de la présente invention consiste, par conséquent, à remédier aux inconvénients précités par la préparation d'une mousse de polyester biodégradable comprenant le mélange du polyester sous forme de masse fondue avec une nanocharge du type argile organomodifiée et la dispersion de celle-ci dans la masse fondue de polyester, et l'expansion de ladite mousse en présence d'un agent moussant de manière à former de la mousse de polyester, ainsi qu'à la mousse de polyester biodégradable ainsi préparée et à son utilisation dans la fabrication de matériaux biodégradables, non toxiques et totalement biocompatibles.

A cet effet, suivant la présente invention, on ajoute à la masse fondue de polyester, un surfactant siliconé conférant à ladite mousse une morphologie poreuse fine, régulière et régulable ; le surfactant siliconé étant avantageusement composé d'une composante polyester miscible avec la masse fondue de polyester et d'une composante poly(diméthylsiloxane) abaissant la tension de surface à l'interface masse fondue de polyester/agent moussant lors des étapes de nucléation et de croissance de la structure poreuse.

Préférentiellement, le surfactant siliconé est un polymère ou copolymère multiséquencé du type [poly(diméthylsiloxane-b-polyester]ₙ, un copolymère triséquencé du type polyester-b-poly(diméthylsiloxane)-b-polyester ou un mélange de ceux-ci, le symbole b signifiant séquence et n représentant un nombre entier pouvant atteindre la valeur de 1 à 10 et étant avantageusement de 2 à 5.

Suivant une forme de réalisation avantageuse de l'invention, ledit polymère ou copolymère multiséquencé répond à la structure [poly(ε-caprolactone)-b-poly(diméthylsiloxane)]ₙ, dans laquelle n vaut de 2 à 5.

Suivant une autre forme de réalisation avantageuse de l'invention, le copolymère triséquencé précité répond à la structure poly(ε-caprolactone)-b-poly(diméthylsiloxane)-b-poly(ε-caprolactone).

Un autre but de l'invention consiste en un procédé de modification de nanocharges, et en particulier de nanocharges non modifiées du type argiles montmorillonites, et aux nanocharges organomodifiées ainsi obtenues.

D'autres détails et particularités de l'invention ressortiront de la description donnée ci-après, à titre d'exemple non limitatif, de quelques formes de réalisation particulières de l'invention.

Le procédé de préparation de mousse, suivant l'invention, consiste à faire usage d'un surfactant siliconé conférant à la mousse de polyester une morphologie poreuse fine, régulée et régulable, qu'il n'a pas été possible d'obtenir jusqu'ici avec les procédés usuels avec ou sans nanocharges. Le surfactant a pour rôle d'aider au moussage, en diminuant la tension à l'interface entre la masse de polyester et les bulles de gaz qui se développent.

Les nanocharges utilisées dans la présente invention sont du type organomodifié, c'est-à-dire des argiles résultant de l'échange des ions alcalins ou alcalino-terreux présents dans les galeries séparant les feuillets de l'argile par des cations organiques du style ammonium quaternaire, sulfonium ou phosphonium. Les argiles utilisées sont en particulier des phyllosilicates comme, par exemple, la montmorillonite, la vermiculite et la kaolinite. Ces argiles ont une structure en feuillets, et contiennent à l'état natif entre les feuillets des cations alcalins tels que K⁺ et Na⁺ ou alcalino-terreux ou encore, à l'état modifié, des cations organiques tels que des ions alkylammonium, et/ou des ions alkylphosphonium, et/ou des ions alkylsulfonium obtenus par une réaction d'échange ionique. Les nanocharges utilisées préférentiellement dans la présente invention sont organomodifiées par des ions ammonium quaternaire du type N⁺R₁R₂R₃R₄, des ions sulfonium de type S⁺R₁R₂R₃, des ions phosphonium P⁺R₁R₂R₃R₄, R₁ à R₄ étant identiques ou différents et représentant de l'hydrogène, un groupe alkyle en C₁-C₂₅ substitué ou non ou un groupe phényle substitué ou non, ou des mélanges de telles argiles. On utilisera, par exemple, des nanocharges organomodifiées par des ions diméthyldioctadécyl ammonium, des ions octadécylamine quaternisée, des ions diméthyl (2-éthylhexyl) suif hydrogéné ammonium ou par des acides aminodécanoïques. Si l'on veut favoriser l'exfoliation des plaquettes d'argile par le polymère et tirer profit au maximum de leur dimension nanoscopique, on utilisera avantageusement une argile organomodifiée par des ions ammonium quaternaire dont un ou plusieurs groupes alkyle sont fonctionnalisés par des groupes polaires et/ou réactifs du type hydroxyle, isocyanate, thiol, acide carboxylique pouvant interagir/réagir spécifiquement avec la matrice polymère. De cette façon, les feuillets de l'argile sont rendus organophiles et leur dispersion au sein du polymère, lors d'une mise en oeuvre à l'état fondu, facilitée. La modification des argiles peut être réalisée dans des solvants conventionnels, comme l'eau ou des alcools tels que le méthanol. Des nanocharges convenant particulièrement bien sont la montmorillonite modifiée par des ions diméthyl suif dihydrogéné ammonium délivrée sous la dénomination commerciale Claytone HY®, la montmorillonite modifiée par des ions diméthyl(2-éthylhexyl) suif hydrogéné délivrée sous la dénomination commerciale Cloisite 25 A@ et la montmorillonite modifiée par des ions bis(hydroxyéthylméthyl) suif hydrogéné ammonium délivrée sous la dénomination commerciale Cloisite 30 B®, ainsi que leurs mélanges. Ces nanocharges sont d'une manière générale ajoutées sous forme d'une poudre extrêmement pulvérulente dispersée lors du mélange à chaud du polymère.

L'exfoliation de l'argile organomodifiée peut encore être améliorée par le greffage de courtes chaînes de polymère sur la charge. Dans ce but, l'argile est modifiée par un groupement fonctionnel susceptible d'amorcer une réaction de polymérisation. Les macromolécules sont ainsi générées in situ à partir de la charge et leur croissance provoque l'exfoliation de l'argile.

L'incorporation de l'argile organomodifiée et son exfoliation au sein de la matrice polymère donne lieu à la formation d'un nanocomposite organique/inorganique qui sera moussé. Les avantages d'un tel matériau par rapport à un composite traditionnel à base de charges microscopiques et/ou à une matrice polymère non chargée sont les suivants :
- Les plaquettes d'argile, fortement anisotropiques, vont s'orienter parallèlement à la direction de déformation biaxiale des parois cellulaires en croissance et ainsi augmenter leur viscosité élongationnelle au profit d'une stabilisation de la structure cellulaire de la mousse.
- De dimension nanométrique, ces charges devraient créer une discontinuité dans la matrice polymère et ainsi contribuer efficacement à la diffusion du gaz d'expansion des cellules vers le polymère les entourant. La phase initiale de nucléation des cellules, qui contrôle la densité ou le nombre de cellules générées au sein de la mousse sera donc favorisée en présence de ces nanocharges. On peut estimer que les nanocharges fournissent de 20 à 100 fois, en fonction de leur degré d'exfoliation, plus de sites potentiels de nucléation que les agents de nucléation standards et de dimensions supérieures. Normalement, pour un taux de nanocharges de 1 % en volume/volume, il y aura 8 × 10¹² particules ou sites potentiels de nucléation par centimètre cube, si les particules ont les dimensions suivantes : 20 x 200 x 300 nm, ce qui correspond à l'empilement d'environ 20 plaquettes. Dans le cas d'une exfoliation totale de ces dernières, ce site de nombres potentiels de nucléation par centimètre cube atteint 2 × 10¹⁴.
- Les charges inorganiques, usuelles, dont les agents de nucléation, ajoutées à la formulation peuvent affecter notamment la stabilité mécanique de la mousse en changeant les propriétés physiques de la matrice polymère. Normalement, les agents nucléants traditionnels sont connus pour favoriser la cristallisation du polymère, ce qui réduit sa résilience. Contrairement aux charges traditionnelles, les nanoparticules peuvent avoir un effet dépressif sur la cristallisation du polymère.
- L'alignement des plaquettes d'argile au sein des parois cellulaires crée une barrière physique au passage des gaz. De cette façon, le gaz de moussage est plus efficacement retenu dans les cellules, au profit de la stabilité dimensionnelle de la mousse. Cette étanchéité accrue du polymère rend possible l'utilisation de gaz d'expansion caractérisés par une grande vitesse de diffusion à travers la matrice de polymère, comme le CO₂ supercritique.
- L'intégrité des chaînes de polymère constituant la matrice organique du matériau est conservée avec les facilités de mise en oeuvre et de recyclage propres aux thermoplastiques. Les propriétés de biodégradabilité et de biocompatibilité des polyesters biodégradables sont ainsi maintenues.
- L'incorporation de nanocharges dans un polymère biodégradable accélère sa vitesse de décomposition.
- L'argile est naturelle, d'une toxicité nulle et d'un coût non prohibitif.
- La dispersion de silicates exfoliés dans la matrice polymère est également susceptible d'améliorer d'autres propriétés telles que les propriétés mécaniques et thermiques et même la résistance au feu du matériau.

L'incorporation d'argiles exfoliées dans le polymère, à raison d'au plus 15 %, et avantageusement de 1 à 3 % par rapport au polyester, combine par conséquent une série de fonctions habituellement assurées par une série d'additifs tels qu'agents de réticulation chimique (peroxydes), nucléants (talc), additifs pour augmenter les propriétés barrières du polymère (acides gras), charges renforçantes (billes de verre, fibres de verre).

La nanocharge du type argile organomodifiée seule ne conduit pas à l'obtention d'une mousse de morphologie poreuse fine régulée et régulable et on a constaté, d'une façon surprenante, et c'est là une caractéristique essentielle de l'invention que l'utilisation combinée de la nanocharge inorganique et d'un surfactant siliconé conférait à ladite mousse la structure homogène recherchée. Ce surfactant siliconé est en fait composé d'une composante polyester miscible avec la masse fondue de polyester et d'une composante poly(diméthylsiloxane) abaissant la tension de surface de ladite masse de polyester. Les surfactants siliconés utilisés dans le cadre du procédé de l'invention sont de deux types et sont soit des polymères ou copolymères multiséquencés du type [poly(diméthylsiloxane-b-polyester]ₙ, soit des copolymères triséquencés du type polyester-b-poly(diméthylsiloxane)-b-polyester, ou encore des mélanges de ceux-ci, le symbole b signifiant séquence et n représentant un nombre entier pouvant atteindre la valeur de 1 à 10 et étant avantageusement de 2 à 5.

Les surfactants siliconés appartenant à la première classe sont préparés, par exemple, par couplage, via des isocyanates, de séquences poly(diméthylsiloxane) comportant deux bouts de chaîne de type alcool et de séquences polyester également dotées de deux bouts de chaîne de type alcool. La synthèse se réalise en fait en deux étapes, la première consistant par exemple à faire réagir l'un des polymères [par exemple de la poly(ε-caprolactone)] difonctionnel (deux groupements alcool) avec deux équivalents de toluène diisocyanate à 60°C pendant 4 heures, réalisant ainsi un couplage avec la fonction la plus réactive. La seconde étape consiste à activer par exemple par un catalyseur (dilaurate de dibutylétain en quantité catalytique) à 60°C, la fonction la moins réactive du toluène diisocyanate et incorporer ainsi en 4 heures de réaction deux équivalents du second polymère (polydiméthylsiloxane doté de deux groupes alcool). Ces séquences de polydiméthylsiloxane ont la structure chimique HO-(CH₂)ₘ[Si(CH₃)₂O]ₙSi(CH₃)₂-(CH₂)ₘOH, m pouvant avoir une valeur de 2 à 10. Des exemples de produits dans le commerce répondant à cette structure sont le Tegomer HSi 2111, le Tegomer HSi 2311 et le Tegomer HSi 2711, ces trois produits ayant les caractéristiques suivantes : groupes alcool primaire, fonctionnalité de 2, valeur de n (nombre d'unités répétitives) 10, 30 et 70, poids moléculaire approximatif (grammes/mole) : 860, 2500 et 5600.

Les copolymères triséquencés du type polyester-b-poly(diméthylsiloxane)-b-polyester appartenant à la seconde classe de surfactants siliconés sont généralement préparés par l'utilisation d'un polydiméthylsiloxane comportant deux bouts de chaîne alcool primaire en tant que macroamorceur de la polymérisation par ouverture de cycle de (di)ester cyclique, par exemple de la caprolactone, catalysée par un catalyseur approprié tel que l'octoate d'étain. Le macroamorceur polydiméthylsiloxane a d'abord été préparé par ouverture de cycle assistée par l'hydroxyde de potassium de l'hexaméthylcyclotrisiloxane suivie de l'addition de quelques unités d'oxyde d'éthylène fournissant ainsi un PDMS terminé par deux groupes carbinols ou de l'ajout de chlorodimethylsilane fournissant ainsi un PDMS terminé par 2 groupes Si-H greffés ensuite par hydrosilylation sur un alcool vinylique. Comme on l'a déjà précisé, de façon surprenante l'utilisation combinée d'une argile organomodifiée et de ce surfactant siliconé conduit à une amélioration remarquable de la structure de la mousse, par une diminution de la taille moyenne des cellules d'au moins un ordre de grandeur, les cellules sont majoritairement fermées avec une intégrité des parois cellulaires, l'état de surface (la peau) de la mousse est beaucoup plus lisse et sans craquelures apparentes, une diminution de la densité apparente de la mousse (d inférieure à 100 kg/m³) et du module de compression (matériau plus souple), en conférant ainsi à la mousse une structure essentiellement homogène.

Deux hypothèses sont avancées pour expliquer les synergies qui résultent de la combinaison d'argile organomodifiée/ surfactant siliconé :
- La croissance des cellules résulte de l'expansion du gaz moussant à laquelle s'oppose la résistance visqueuse du polymère (augmentée par l'incorporation d'argile), mais aussi sa tension de surface. En fait, le surfactant siliconé abaisse la tension de surface de la matrice de polyester via ses séquences de polydiméthylsiloxane au profit d'une plus grande stabilité des cellules vis-à-vis de la coalescence. Le surfactant siliconé serait donc à l'origine d'un contrôle thermodynamique (diminution de l'énergie du système) de la structure cellulaire, alors que l'argile aurait un effet rhéologique et donc cinétique.
- Le surfactant siliconé interviendrait dans le mécanisme d'exfoliation/intercalation de l'argile. Des interactions privilégiées entre l'argile et le surfactant existeraient. L'interface polymère/argile serait alors remplacée par une double interface plus mobile (polymère/surfactant et argile/surfactant) et mieux adaptée au moussage.

Une structure optimale du surfactant siliconé a pu être déterminée, en variant à la fois l'architecture (nombre de séquences) du polymère ou copolymère et la longueur des séquences de poly(diméthylsiloxane). La quantité en poids de surfactant siliconé en pourcentage par rapport au polyester, est de 0.5 à 10 %, avantageusement de 1,5 à 3 %.

Le procédé de préparation de mousses de polyester biodégradables suivant l'invention basé sur l'incorporation et la dispersion dans la matrice de polyester fondu d'argile organomodifiée du type silicate multicouche et d'un surfactant polymère siliconé peut être utilisé avec les deux types principaux d'agents moussants physiques et chimiques, selon l'application envisagée. Les agents chimiques sont des agents porogènes avantageusement sous forme de poudres qui se décomposent à des températures relativement élevées, typiquement de 170°C pour l'azodicarbonamide en présence d'un accélérateur de décomposition approprié, tel que l'oxyde de zinc et/ou le stéarate de zinc. D'autres accélérateurs de décomposition de l'azodicarbonamide sont des sels de métaux de transition tels que les sels de plomb et cadmium. On pourrait également utiliser certains polyols, alcools, amines, acides organiques et l'urée. Toutefois, à ces températures élevées, les polyesters biodégradables, en particulier la poly(ε-caprolactone), se dégradent rapidement, ce qui limite fortement l'utilisation de ce processus dans le cas des polymères thermosensibles. L'utilisation combinée de la nanocharge et du surfactant à base de polydiméthylsiloxane permet de confectionner des mousses à des températures supérieures à 170°C, sans dégradation ou jaunissement excessif du matériau, grâce à une résistance accrue du polymère à la thermooxydation. Bien qu'ils soient largement utilisés, car faciles à mettre en oeuvre, les agents chimiques présentent plusieurs inconvénients tels que la formation de résidus solides (non décomposés) et la production de gaz toxiques ou corrosifs, l'ammoniac et le monoxyde de carbone dans le cas de l'azodicarbonamide. Ce procédé basé sur l'utilisation d'un agent moussant chimique sera donc utilisé pour produire des mousses de polyester destinées à un usage courant, dont l'attribut majeur est la biodégradabilité. La quantité en poids d'agent moussant porogène, en pourcentage par rapport au polyester, est d'une façon appropriée de 5 à 20 %, et avantageusement de 10 à 15 %, la quantité en poids d'accélérateur de décomposition, en pourcentage par rapport au polyester, étant d'une façon appropriée de 1 à 10 %, et avantageusement de 3 à 5 %. Bien que l'ordre d'addition des différents composants précités ne soit pas critique, il est cependant avantageux d'ajouter la nanocharge, l'agent moussant porogène du type azodicarbonamide, l'accélérateur de décomposition et le surfactant siliconé sous la forme d'un mélange à sec, avantageusement sous forme de poudre à la masse fondue de polyester. Suivant l'invention, le surfactant siliconé est préférentiellement ajouté simultanément à la nanocharge.

Les agents moussants physiques tels que l'azote moléculaire, le dioxyde de carbone se trouvent sous forme de gaz. Ces gaz sont solubles dans la masse fondue de polyester sous haute pression. En dépressurisant le système, la nucléation et la croissance des bulles génèrent une structure cellulaire. L'utilisation de CO₂, dans son état supercritique (fluide de comportement intermédiaire entre les états gazeux et liquide) présente de nombreux avantages, et notamment une non-toxicité par rapport aux agents moussants chimiques, aucun produit solide ne résidant dans la structure moussée et aucun gaz toxique n'étant produit, une sécurité, la nature inerte des gaz conférant une sécurité d'emploi, une capacité d'extraction, le gaz contribuant à améliorer le degré de pureté du polymère expansé, une propriété de solvatation pouvant être mise à profit pour incorporer des additifs tels que des agents thérapeutiques au sein de la matrice de polyester, lors de l'étape de saturation de cette dernière par le CO₂ supercritique, et un moussage à très basse température, la dissolution du CO₂ dans la matrice de polyester (avant son expansion) donnant lieu à un abaissement des températures de transition du polymère (T_{g} et Tₘ). De cette façon, le procédé au CO₂ peut être mis en oeuvre à des températures inférieures à la T_{g} ou Tₘ initiale (60°C pour la polycaprolactone) dans le cas d'un polymère (semi-)cristallin, rendant ainsi possible le moussage de matrices thermosensibles. Dès lors, le procédé de moussage faisant appel au CO₂ est de nature à trouver des applications dans un secteur aussi important que le domaine (bio)médical.

Les mousses nanocomposites à base de polyesters biodégradables, objets de l'invention, s'inscrivent dans le contexte général des matériaux biodégradables. Outre l'amélioration des propriétés mécaniques et thermiques attendues de l'incorporation d'une nanocharge dans le polymère, le recours à une mousse d'une densité jusqu'à 20 fois inférieure à celle du polymère en masse contribue à abaisser le coût de ces polymères, tout en étendant leur champ d'applications. Normalement, ces mousses pourront être valorisées pour la fabrication de matériaux caractérisés par des "temps de vie" relativement courts et/ou utilisés dans un environnement naturel, comme par exemple les revêtements extérieurs, emballages de boissons et aliments à consommation rapide, bouteilles, couverts jetables, objets thermoformés, fibres, films, mélanges avec amidon, implants médicaux biorésorbables, pots de transplantation en agriculture, marquages et fixations de plantes, plateaux pour soins, biomatériaux, patchs résorbables. Des exemples de polyesters biodégradables sont les polymères dérivés de toute lactone (ester cyclique), tels que la poly(ε-caprolactone), et de tout diester cyclique comme les polylactides et polyglycolides, tels que le poly(acide lactique), les poly(hydroxyacides) tels que le poly(hydroxybutyrate-co-hydroxyvalérate) ainsi que les polyesters tels que le poly(butylène succinate), le poly(butylène adipate) et le poly(butylène téréphtalate) ainsi que le poly(ester amide). Ces matériaux plastiques sont généralement fournis par les fabricants sous la forme de "pellets", c'est-à-dire de granulés de polymère.

Comme on l'a déjà précisé précédemment, la préparation des nanocharges ou argiles organomodifiées est réalisée dans des solvants polaires comme l'eau ou des alcools tels que le méthanol pendant des périodes de quelques heures et à des températures modérément élevées, le plus souvent de 70°C. Lors de ces réactions, un sel d'ammonium quaternaire, de sulfonium ou de phosphonium est mis en présence d'argile naturelle présentant à la surface de chaque feuillet des ions alcalins et alcalino-terreux liés ioniquement à des contre-ions oxygène (par exemple, motif O⁻ Na⁺). Suite à la réaction, l'ion ammonium, sulfonium ou phosphonium se retrouve échangé au sodium et dès lors fixé ioniquement à la surface du feuillet d'argile. Après la réaction de modification dans l'eau ou l'alcool, l'argile humide doit être filtrée et ensuite séchée ce qui occasionne une dépense d'énergie considérable en raison des chaleurs latentes de vaporisation élevées des solvants utilisées, ce qui constitue le désavantage majeur de cette méthode dite humide. De plus, les eaux contaminées, suite à l'échange, nécessitent encore des efforts d'épuration avant rejet. Cette méthode de préparation dans l'eau ou un alcool présente également une sérieuse limitation quant à la gamme incomplète des organomodifiants (du type ammonium, sulfonium, phosphonium) utilisables. En effet, le succès de la méthode humide de modification des argiles dépend profondément de la solubilité préalable de l'organomodifiant dans le milieu dans lequel l'argile sera dispersé lors de sa modification. Dès lors, la modification d'argiles par des organomodifiants hautement fluorés ou siliconés ne pourra se réaliser dans l'eau et devra recourir à des solvants adéquats souvent d'un prix non négligeable.

La présente invention a pour but, par conséquent, de palier à toutes ces limitations du procédé humide en proposant un procédé souple, rapide et économique de modification d'argiles ne faisant point appel à un solvant conventionnel.

A cet effet, suivant la présente invention, on mélange intimement l'argile non modifiée avec un organomodifiant choisi parmi les sels d'ammonium quaternaire, les sels de sulfonium, les sels de phosphonium, les sels d'ammonium siliconé, les sels d'ammonium hautement fluoré, les précurseurs de ces sels et les mélanges d'au moins deux de ces sels, en présence de dioxyde de carbone sous pression, l'argile et l'organomodifiant étant avantageusement intimement mélangés avant d'être mis au contact du CO₂ sous pression.

Cette méthode dite sèche se base par conséquent sur l'utilisation du dioxyde de carbone comprimé et de préférence porté à l'état supercritique comme milieu de dispersion de l'argile et de modification de celle-ci. La dispersion des argiles dans le CO₂ supercritique est relativement aisée en raison de la faible viscosité des fluides supercritiques. De plus, l'intégration de molécules dans l'espace interfeuillet de l'argile (étape d'imprégnation) profite de la haute diffusité des mélanges basés sur les fluides supercritiques. Cette étape d'imprégnation étant accompagnée d'une variation de volume négative, le procédé sera favorisé par le travail à une haute pression telle que celle communément utilisée lors de procédés recourant aux fluides supercritiques ou fortement comprimé, c'est-à-dire aux pressions allant de 50 à 300 bars, et à une température de 30 à 55°C, avantageusement d'environ 40°C.

On donne ci-après cinq exemples de préparation (Exemples 1 à 5) de mousses composites suivant l'invention mises en oeuvre, soit par dissolution et expansion d'un agent moussant physique tel que le CO₂ supercritique, soit par décomposition thermique d'un agent porogène tel que l'azodicarbonamide, avec dans les deux cas une amélioration sensible de la structure cellulaire par rapport à des matériaux témoins sans nanocharge combinée à un surfactant siliconé.

Les six exemples suivants (Exemples 6 à 11) concernent la modification d'argiles vierges effectuée suivant le procédé au CO₂ de l'invention. L'Exemple 11 se rapporte plus particulièrement à la préparation d'argiles organomodifiées non pas à partir d'un ammonium ajouté tel quel mais à partir de ses molécules "parentes", c'est-à-dire une amine et un halogénure d'alkyle. Il s'agit en fait d'un procédé partant des ingrédients à "l'état brut", qui présente l'avantage de générer une argile de plus haute valeur ajoutée. De même, les sels de sulfonium peuvent être synthétisés par addition d'un thioéther et d'un époxide, comme décrit dans *Langmuir* **2000,** 16, 3214-3220.

On notera bien entendu que ces exemples sont donnés uniquement à titre illustratif et ne constituent en aucun cas une limitation au cadre de l'invention.

### Exemple comparatif 1

### Préparation de mousses de poly(ε-caprolactone) sans surfactant siliconé

Des mélanges de poly(ε-caprolactone) (d'une masse moléculaire de 50.000 g/mole), d'azodicarbonamide (ADC FC2 de Bayer) comme agent moussant, d'oxyde de zinc (ZnO 2C, de Silox) comme accélérateur de décomposition de l'azodicarbonamide et de montmorillonite modifiée par des ions diméthyl suif hydrogéné ammonium (Claytone HY®) ont été mis en oeuvre à l'aide d'un mélangeur interne du type Brabander d'une capacité de 50 cm³ à 90°C, 60 tours par minute et durant 10 minutes. La matrice de polyester a d'abord été fondue à un cisaillement modéré (25 tours par minute), avant d'y introduire un mélange à sec des différents additifs (azodicarbonamide, ZnO et Claytone HY). Ensuite, les mélanges réalisés sont amenés sous la forme de pastilles cylindriques de 25 mm x 2 mm, à l'aide d'une presse du type Fontijn à 90°C, sous une pression de 5 MPa et durant 5 minutes. Afin d'étudier l'effet de l'argile organomodifiée sur le comportement viscoélastique du polyester dans son état fondu, les mélanges réalisés ont été analysés, lors d'un balayage en température, à l'aide d'un rhéomètre ARES (Rheometric Scientific®). Les conditions de mesure étaient les suivantes : configuration plateau-plateau (25 mm de diamètre), fréquence d'oscillation de 1 Hz, 1 % de déformation relative, rampe de chauffe de 5°C/minute et force normale fixée à 40 g. La valeur de la tangente Delta (T_{g} Delta), c'est-à-dire le rapport entre les modules visqueux (G") et élastique (G'), a été relevée à 140°C, juste avant la décomposition de l'azodicarbonamide (ADC). De cette façon, la mesure expérimentale n'est pas perturbée par l'expansion de la mousse entre les plateaux du rhéomètre. En parallèle, les échantillons ont été moussés, de façon conventionnelle, dans une étuve à 170°C ± 1°C durant 7 minutes. La densité des échantillons expansés a été évaluée par simple pesée d'un échantillon de mousse de la forme d'un cube aux dimensions de 10 x 10 x 10 mm et normalisation de la valeur par rapport au volume. Le Tableau 1 donne la composition des mélanges réalisés, les valeurs expérimentales de T_{g} Delta ainsi que les densités apparentes des mousses.

**Tableau 1**

| Mousse n° | Formulation des mousses (quantités en grammes) | | | Caractérisation | |
|---|---|---|---|---|---|
| | PCL (g) | ADC+Zn O (g) | Claytone HY® (g) | T_{g} Delta à 140°C | Densité (kg/m³) |
| 1 | 40 | 6+2 | - | 20,05 | 156 |
| 2 | 40 | 6+2 | 0,75 (1,875 %) | 5,37 | 133 |
| 3 | 40 | 6+2 | 1,5 (3,754 %) | 2,31 | 104 |
| 4 | 40 | 6+2 | 3 | 1,69 | 261 |
| 5 | 40 | 6+2 | 6 | 0,815 | 626 |
| PCL : poly(ε-caprolactone) de masse moléculaire de 50.000 g/mole (Capa, Solvay) ADC : azodicarbonamide de type ADC FC2 (Bayer) ZnO : qualité 2C (Silox) Claytone HY® : montmorillonite modifiée par des ions diméthyl suif hydrogéné ammonium (Southem Clay Products). | | | | | |

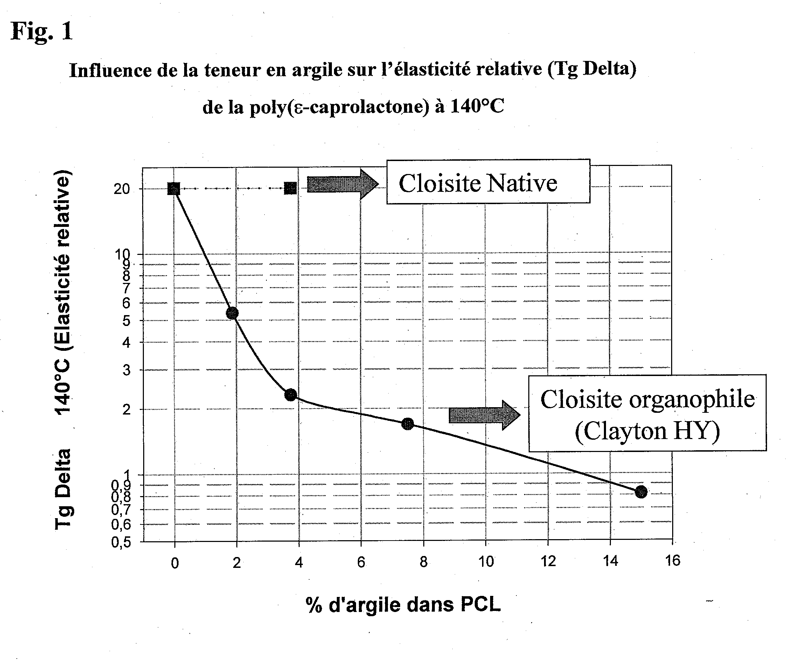

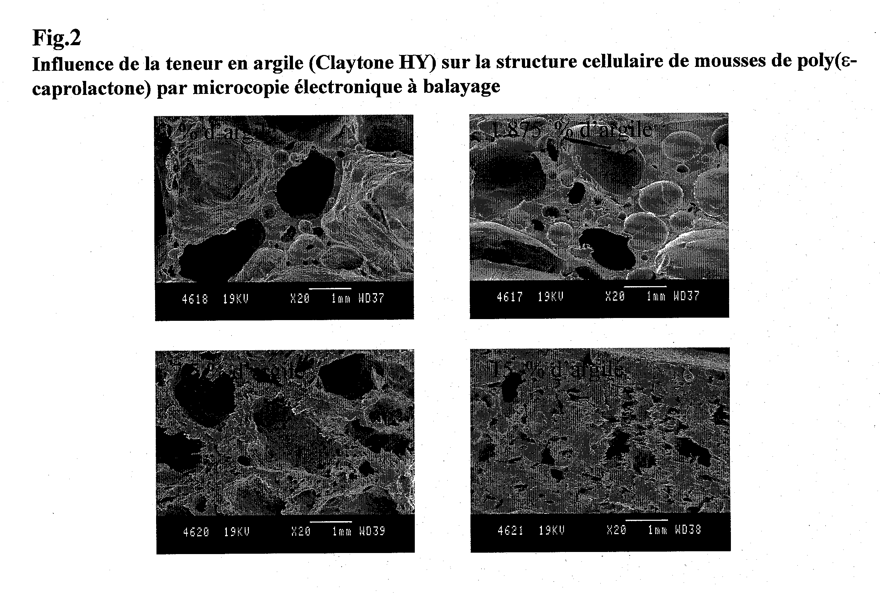

Comme on peut le voir, la valeur de T_{g} Delta diminue rapidement avec la teneur en argile (Claytone HY) du mélange, indiquant un renforcement du caractère élastique du polymère à l'état fondu (voir également la figure 1 des dessins annexés à cet égard). Un taux critique de Claytone HY (0,75-1,5 g) donne lieu à la structure cellulaire la plus homogène et aux densités les plus faibles. Ce taux optimal d'argile détermine une fenêtre de propriétés viscoélastiques du polymère adaptée au "moussage". Une quantité inférieure d'argile ne permet pas aux cellules de retenir suffisamment la pression du gaz et celles-ci finissent par coalescer et/ou s'effondrer. Par contre, en présence d'une quantité excessive de nanocharges renforçantes, la PCL est trop rigide pour permettre l'expansion des cellules [voir à ce sujet la figure 2 montrant l'influence de la teneur en argile sur la structure cellulaire des mousses de poly(s-caprolactone) par microscopie électronique à balayage]. Si l'influence positive de la dispersion d'argile sur la moussabilité de la poly(ε-caprolactone), en corrélation avec un renforcement de la résistance à chaud du polymère, est démontrée, la taille moyenne des cellules (quelques millimètres) et l'état de surface de la mousse (peau) sont deux paramètres qui demandent à être encore améliorés.

### Exemple 2

### Préparation de surfactant siliconé

On a préparé un copolymère multiséquencé par couplage d'un polydiméthylsiloxane diol et d'une poly(ε-caprolactone diol) en présence de toluène diisocyanate (TDI). Le copolymère sera testé comme additif au sein des mousses nanocomposites de poly(ε-caprolactone)/argile dans l'Exemple 3. Le segment polydiméthylsiloxane (PDMS) doit assurer l'abaissement de la tension interfaciale entre le gaz produit par la décomposition de l'agent moussant et la matrice polymère, alors que la séquence poly(ε-caprolactone) (PCL) sera à même d'assurer un ancrage suffisant de l'additif dans cette matrice polymère. Le protocole de préparation ce de copolymère multiséquencé "PDMS/PCL" est le suivant. Dans un premier temps, les OH terminaux de la PCL (mg/mole) sont transformés en groupes isocyanate, en présence de deux équivalents de toluène diisocyanate (TDI). La réaction préférentielle du NCO en position 4 du TDI est suivie par une spectroscopie infrarouge (FTIR). Après 4 heures de réaction, à 60°C et en masse, la bande d'absorption des deux NCO (environ 2.270 cm⁻¹) voit sa largeur à mi-hauteur fortement diminuée, suite à la consommation du NCO en position 4. Parallèlement, un uréthanne est formé, ce qui donne lieu à un épaulement du côté des faibles fréquences du signal FTIR caractéristique des fonctions ester de la PCL (1.735 cm⁻¹). Le prépolymère NCO-PCL-NCO ainsi formé, est alors additionné de deux équivalents d'un homopolymère de PDMS porteur de bouts de chaîne carbinol (Tegomer 2111, polymère de la société Goldschmidt). La réaction de couplage est réalisée dans les mêmes conditions (60°C, en masse) mais en présence d'une faible quantité de dilaurate de dibutylétain comme catalyseur, le NCO du TDI en position 2 étant intrinsèquement moins réactionnel. Dès l'ajout du PDMS, le milieu réactionnel, initialement transparent, devient blanchâtre, suite à la séparation de phase entre la PCL et le PDMS. Après 4 heures de réaction, la viscosité du produit de réaction a fortement augmenté et son analyse FTIR révèle une disparition totale des groupes isocyanate.

### Exemple 3

### Préparation de mousses de poly(ε-caprolactone) avec surfactant siliconé

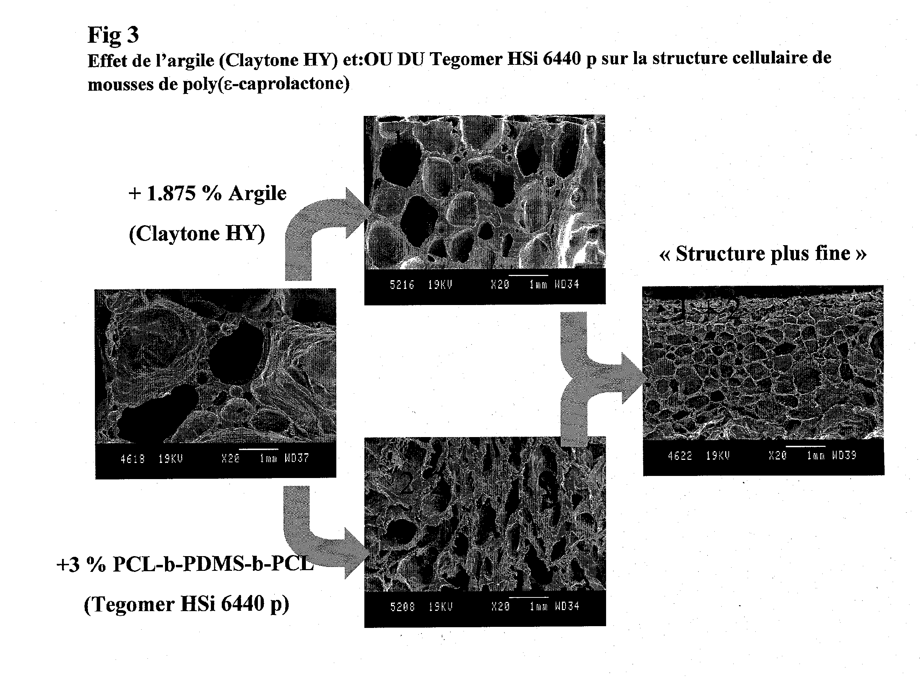

Les mélanges répondant aux formulations de l'Exemple 1 ont été répétés selon le même protocole expérimental, mais en présence d'une faible quantité (0,6 à 1,2 g), comme additif polymère, de surfactant siliconé composé d'une composante [poly(ε-caprolactone)] miscible au polymère et d'une composante [poly(ε-diméthylsiloxane)] de faible tension de surface. Les deux types d'additifs polymères testés étaient : i) un copolymère triséquencé de la structure poly(ε-caprolactone)-b-poly(diméthylsiloxâne)-b-poly(ε-caprolactone) (délivré par la société Goldschmidt sous la dénomination commerciale Tegomer HSi 6440) et ii) le copolymère multibloc de la structure [poly(ε-caprolactone)-b-poly(diméthylsiloxane)]ₙ, n valant de 2 à 5, synthétisé dans le cadre de l'Exemple 2 ci-dessus. A titre de comparaison, un homopolymère de poly(diméthylsiloxane) (Tegomer® 2111) a été testé dans les mêmes conditions. Suite à l'ajout d'un des copolymères à la formulation, à hauteur de 0,6 ou 1,2 g, la densité de la mousse diminue et avoisine désormais les 70 kg/m³ (voir Tableau 2 ci-après). Parallèlement, la taille des cellules de la mousse diminue d'au moins un ordre de grandeur (voir figure 3). Cette diminution est proportionnelle à la quantité d'additif polymère ajouté et est plus marquée dans le cas du copolymère triséquencé sans pour autant affecter la densité apparente des mousses. De surcroît, les cellules deviennent majoritairement fermées et l'état de surface des mousses est plus régulier (peau lisse et sans craquelure apparente). Il est également important de noter que l'homopolymère de poly(diméthylsiloxane) exerce une influence négative sur la moussabilité de la PCL.

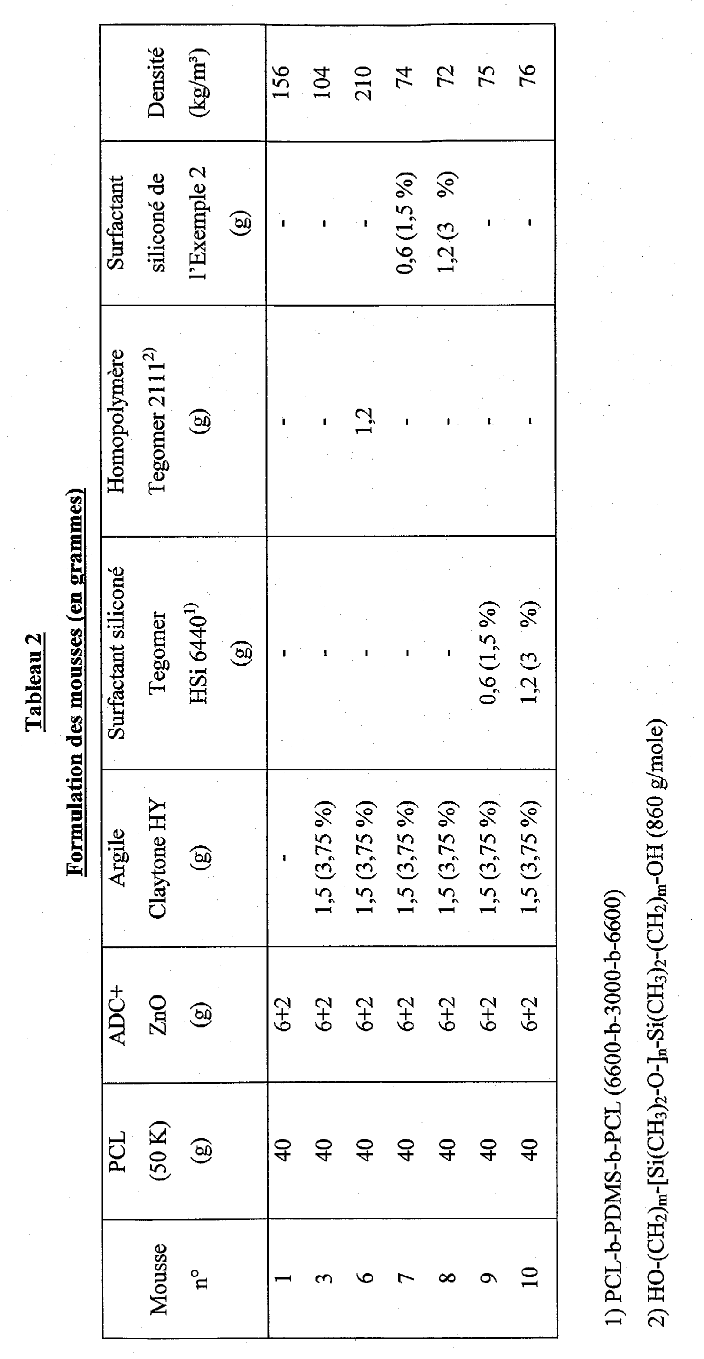

### Exemple 4

Des mélanges ont été réalisés selon le protocole décrit dans l'Exemple 1, mais en présence d'autres argiles organomodifiées multicouche, à savoir :
- une montmorillonite modifiée par des ions diméthyl(2-éthylhexyl) suif hydrogéné ammonium ou Cloisite® 25 A;
- une montmorillonite modifiée par des ions bis(hydroxyéthyl) méthyl suif hydrogéné ammonium ou Cloisite® 30 B;
- une montmorillonite non modifiée ou Cloisite® Na⁺ (ou Li⁺) (Cloisite native).

Ces trois silicates diffèrent donc par la présence et la nature du substituant organique attaché au cation qui va déterminer la compatibilité de la PCL vis-à-vis de la charge et donc le degré d'exfoliation du silicate multicouche. La charge modifiée par des groupes OH en surface (Cloisite 30 B) serait à priori la mieux adaptée à sa dispersion au sein d'une matrice de PCL. En effet, les deux composants mis en présence, le polyester et l'argile, sont susceptibles d'interagir fortement par des ponts hydrogène, ou même de réagir mutuellement (transestérification).

**Tableau 3**

| **Formulation des mousses (en grammes)** **(mousses n° 11, 12 et 13)** | |
|---|---|
| Poly(ε-caprolactone) d'une masse moléculaire annoncée de 50.000 g/mole (Capa@ de Solvay) | 40 g |
| Azodicarbonamide (ADC FC2, de Bayer) | 6 g |
| ZnO 2C (Prayon-Ruppel) | 2 g |
| Cloisite® native, 25A ou 30B | (0,75 g) |
| PCL-b-PDMS-b-PCL (Tegomer® HSi 6440, de Goldschmidt) | (1,2 g) |

### Densité et structure cellulaire

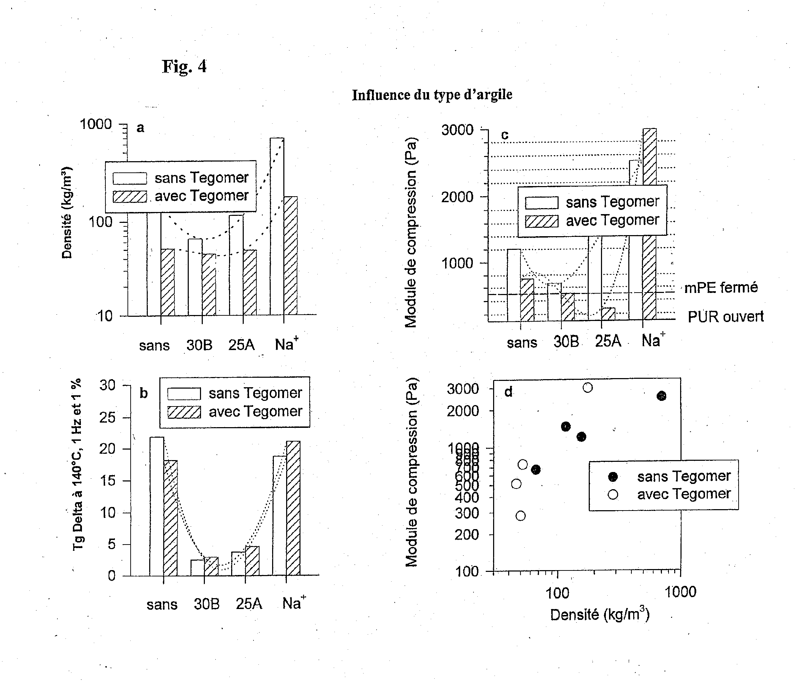

L'incorporation d'argile organophile (25A et 30B) dans la matrice de polyester conduit à une diminution de la densité des mousses (voir figure 4, a). Comme attendu, l'argile du type 30B est la plus efficace, en raison d'une plus grande compatibilité charge/polymère. Dans le même sens, l'argile native, fortement incompatible vis-à-vis de la PCL, n'améliore d'aucune façon le "moussage" de la PCL et semble même l'affecter. Suite à l'utilisation de Tegomer®, on assiste à une diminution (additionnelle) de la densité des matériaux expansés. Les densités obtenues en présence ou non d'argile organophile (25A ou 30B) sont alors comparables et de l'ordre de 50 kg/m³. Cependant, l'utilisation combinée de la Cloisite® organophile et de Tegomer® conduit à une amélioration significative à la fois de la structure cellulaire (plus fine et davantage "fermée") et de l'état de surface (peau) du matériau expansé (beaucoup plus lisse).

### Propriétés viscoélastiques

En vue de mettre en évidence une influence éventuelle de la nanocharge sur le comportement viscoélastique du matériau, on a mesuré, lors d'un balayage en température, la valeur de Tg Delta (rapport entre les modules de perte et de conservation). La valeur expérimentale prise en compte est relevée à 140°C, c'est-à-dire avant la décomposition de l'agent moussant (figure 4, b). Suite à l'incorporation de la nanocharge dans le polymère, la Tg Delta passe d'environ 20 à des valeurs inférieures à 3 et à 5, en présence respectivement de Cloisite® 30B et 25A, ce qui traduit un renforcement considérable du caractère élastique du matériau. La Cloisite® Na⁺ quant à elle ne modifie pas de façon significative le comportement viscoélastique du polymère. A nouveau, cette situation traduit le degré de compatibilité nanocharge/ polymère qui déterminera le niveau d'intercalation/exfoliation de l'argile. On notera aussi que l'incorporation de Tegomer® dans le nanocomposite conduit à une légère augmentation de l'angle de phase. Cette situation pourrait indiquer l'existence d'interactions privilégiées entre l'argile et l'additif siliconé. L'interface polymère/argile serait alors remplacée par une double interface plus mobile polymère/Tegomer® et argile/Tegomer®.

### Flexibilité des mousses

Afin d'établir une corrélation éventuelle entre la structure cellulaire des mousses et leur degré de flexibilité/compressibilité, on a mesuré à l'aide du rhéomètre le module de compression des mousses réalisées. Pour ce faire, un échantillon de mousse (25 x 25 x 10 mm) est fixé entre les plateaux inférieur (25 mm de diamètre) et supérieur (8 mm de diamètre) du rhéomètre. Le plateau de 8 mm est alors déplacé verticalement à une vitesse constante, de façon à comprimer la mousse, ce qui donne lieu à une augmentation linéaire de la force appliquée en fonction du taux de compression de la mousse. La pente de cette relation linéaire fournit, après normalisation par rapport à la section du plateau mobile, la valeur de module recherchée. Les modules expérimentaux rapportés aux figures 4 c et d montrent que les mousses les moins denses sont, de façon générale, les plus flexibles. C'est ainsi que les nanocomposites à base de Cloisite® organophile (30B et 25A) et modifiés par l'ajout de Tegomer® ont une compressibilité intermédiaire entre celles de deux matériaux de référence constitués respectivement d'une majorité de cellules fermées et ouvertes (mPE fermé et PUR ouvert). On notera également que la Cloisite® 25A donne lieu en présence de Tegomer® à une mousse de densité comparable à la Cloisite® 30B, mais beaucoup plus souple. La structure cellulaire joue ici un rôle. En effet, les cellules sont plus fermées en présence de l'argile 30B, ce qui augmente sa résistance à la compression, comme indiqué par les deux matériaux de référence.

En conclusion, la capacité de l'argile à améliorer la "moussabilité" de la PCL (densité, structure cellulaire, flexibilité, état de surface) dépend fortement de la nature de son substituant organique qui va déterminer la compatibilité du polymère vis-à-vis de la charge et donc le degré d'exfoliation du silicate multicouche. Il est donc possible d'établir une hiérarchisation des argiles testées, en fonction de leur efficacité : Cloisite Na⁺ < sans argile < Cloisite 25A < Cloisite 30B. L'utilisation combinée de Tegomer® ne change pas ce classement, mais décuple simplement l'effet de la nanocharge.

### Exemple 5

Les mélanges, dont les compositions sont rapportées dans le Tableau 4 ci-après, ont été réalisés selon le protocole expérimental décrit dans l'Exemple 1. Des pastilles cylindriques de 25 x 2 mm ont ensuite été confectionnées à partir de ces matériaux, selon la procédure classique, avant d'être moussées dans le CO₂ supercritique. Pour ce faire, une pastille de formulation donnée est introduite dans le fond de la cuve d'un réacteur haute pression. Le gaz est alors injecté dans la cuve au moyen d'une pompe seringue haute pression (modèle ISCO 260D), de façon à atteindre une pression de 60 bars. On fixe alors la température désirée (température de saturation : 40-50°C), avant de procéder à une nouvelle pressurisation du réacteur (pression de saturation : 100-200 bars). Après un temps fixé (temps de saturation), le réacteur est ramené à température ambiante et dépressurisé à une vitesse prédéterminée (temps de décompression). La mousse peut alors être récupérée et caractérisée.

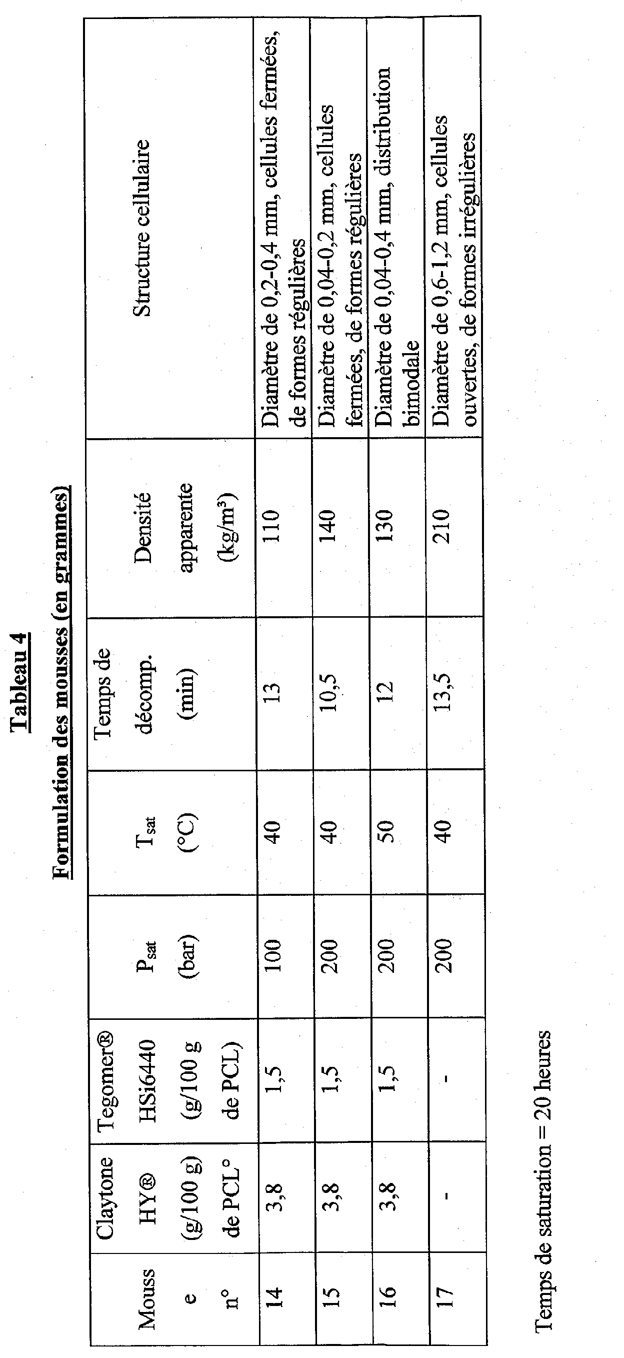

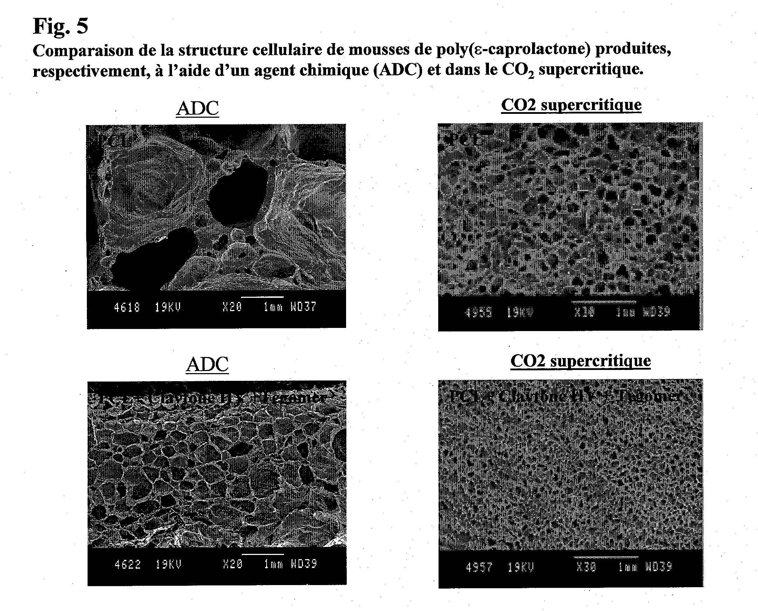

Il est possible d'agir directement et sûrement à la fois sur la densité de la structure poreuse et la taille des cellules en jouant sur les paramètres physiques (Pₛₐₜ, Tₛₐₜ, vitesse de dépressurisation) et la formulation (Claytone® HY, Tegomer®). Le Tableau 4, rapporté ci-dessus, appelle les commentaires suivants :
- Des mousses de faible densité ont été mises en oeuvre à une température de 40°C, soit 20°C inférieurs à la température de fusion de la PCL. De la sorte, la structure cellulaire est beaucoup plus fine que celle manifestée par un matériau homologue mais préparé de façon conventionnelle à 170°C et en présence d'azodicarbonamide (ADC) tel que dans les Exemples 3 et 4 (voir figure 5).
- L'utilisation combinée d'argile (Claytone® HY) et de Tegomer® (mousses n° 15 et 17), dans des conditions de mise en oeuvre identiques, conduit à une diminution de la densité et à une amélioration de la structure cellulaire (voir figure 5 également).
- Une augmentation de la pression de saturation de 100 à 200 bars (mousses n° 14 et 15), toutes autres conditions égales, influence peu la densité apparente du matériau expansé, mais contribue à diminuer la taille des cellules; ce qui en d'autres termes traduit une nucléation plus efficace.
- Une augmentation de la température de saturation de 40 à 50°C (mousses n° 15 et 16) tend à augmenter la taille des cellules et affecte l'homogénéité de la structure cellulaire.

Outre les nombreux avantages clairement définis du procédé de préparation de mousses de polyester biodégradables de l'invention comparativement aux procédés traditionnels ou autres formulations connues, on notera que le fait de substituer à la multitude d'additifs traditionnellement utilisés dans les formulations de mousses une nanocharge organophile combinée à un additif polymère siliconé spécifique a permis de fabriquer des polymères biodégradables d'une pureté et d'une biocompatibilité qui n'avaient pas encore pu être atteintes jusqu'à présent, de qualités exigées notamment dans la fabrication des polymères de grade médical.

### Exemple 6

### Modification d'argile vierge par différents sels d'alkylammonium

De l'argile non modifiée (Cloisite® Na⁺; 2 à 5 g) est mélangée intimement avec un léger excès (1,1 équivalent par rapport à la capacité d'échange de l'argile) de chacun des trois sels d'ammonium quaternaire indiqués dans le Tableau 5 ci-après puis versée dans un réacteur haute pression d'un volume égal à 100 ml. La température et la pression en CO₂ de l'enceinte sont ensuite ajustées et maintenues aux valeurs désirées (40°C et 200 bars). L'échange ionique est réalisée sous une agitation constante (700 tours par minute) durant l'intervalle de temps spécifié dans le Tableau 5. Après réaction, le réacteur est lentement dépressurisé. Afin de caractériser la poudre recueillie, celle-ci est lavée à l'eau, avec un mélange d'eau/méthanol (1/1 en volume/volume) et au méthanol pour être enfin séchée. La prise de poids est calculée par TGA et la poudre est caractérisée par diffraction de rayons X. L'utilisation de ces solvants telle que rapportée ne se justifie en fait que par la nécessité de se débarrasser de l'ammonium non échangé afin de mieux caractériser lors des analyses l'argile modifiée dans le CO₂ supercritique par voie sèche.

**Tableau 5**

| Essai n° | P (bar) | t (°C) | Temps (h) | Nature du sel d'ammonium quaternaire | Distance interfeuillet (Å) (d₀₀₁)^{c} | Taux d'échange ionique (%)^{b} |
|---|---|---|---|---|---|---|
| 1 | 200 | 40 | 4 | TEACl.nH₂O a | 14,2 | 69 |
| 2 | 200 | 40 | 6 | TBAHS^{a} | 16,8 | 89 |
| 3 | 200 | 40 | 4 | DDDMABr^{a} | 18,4 | 77 |

| | | | | | | |
|---|---|---|---|---|---|---|
| ^{a} Les abréviations TEACI, TBAHS, DDDMABr désignent respectivement le chlorure de tétraéthylammonium, l'hydrogénosulfate de tétrabutylammonium et le bromure de didodécyldiméthylammonium; les trois essais ont donc été réalisés en présence de trois différents sels d'ammonium quaternaire porteurs de chaînes alkyle de longueur variable. | | | | | | |
| ^{b} Le taux d'échange ionique est le rapport entre la quantité de cations ammonium quaternaire fixés à la surface des feuillets d'argile [déterminée par analyse thermogravimétrique (TGA)] et la quantité théorique maximale de ces cations dans l'hypothèse d'un échange ionique complet (déterminée au départ de la capacité d'échange de la Cloisite Na⁺, soit 92 méq/100 g d'argile). Ce taux correspond donc au pourcentage d'ions Na⁺ effectivement déplacés par des ions ammonium lors de la réaction d'échange. | | | | | | |
| ^{c} La distance interfeuillet d₀₀₁ mesure l'espacement moyen séparant deux feuillets d'argile suite à la modification de cette argile par un alkylammonium. Cette distance est mesurée par diffraction des rayons X. L'argile native [ou argile vierge ou argile non(organo)modifiée] présente un espace interfeuillet de 11,8 Å. | | | | | | |

Les constatations sur la base des résultats obtenus sont les suivantes :
- l'analyse TGA montre l'incorporation des cations ammonium quaternaire au sein de l'argile naturelle examinée,
- les cations échangés sont chimisorbés à la surface des feuilles de l'argile, de telle manière qu'un lavage à l'eau ou au méthanol (bons solvants des sels testés) ne puisse les éliminer,
- suite à l'échange, la distance interfeuillet de la Cloisite organomodifiée est significativement augmentée puisqu'elle passe de 11,8 Å pour l'argile non modifiée à 14,2, 16,8 et 18,4 Å dans les essais n° 1, 2 et 3,
- plus le cation ammonium quaternaire est volumineux, plus la distance interfeuillet après modification est grande,
- des taux de modification appréciables sont obtenus en des temps de réaction relativement courts.

### Exemple 7

### Etude de la cinétique d'échange et de l'effet de la pression sur la modification des argiles par des alkylammoniums dans le CO₂ supercritique

**Tableau 6**

| Essai n° | Temps (h) | Distance interfeuillet (Å) | Taux d'échange ionique (%) |
|---|---|---|---|
| 1 | 4 | 18,4 | 86 |
| 2 | 1 | 18,4 | 77 |
| 3 | 0,25 | 18,4 | 65 |

Les trois essais ont été réalisés conformément au mode opératoire de l'Exemple 6, soit à 40°C et sous une pression de 200 bars. L'agent organomodifiant utilisé est le DDDMABr, c'est-à-dire le bromure de didodécyldiméthylammonium.

L'essai n° 3 montre que la presque totalité des ions sodium à la surface des feuillets d'argile sont échangés en un temps très court. Ce résultat est d'autant plus étonnant que l'agent modifiant utilisé est un ammonium quaternaire très volumineux (porteur de deux chaînes alkyle en C₁₂). On notera à cet égard que la cinétique de modification des argiles dans l'eau chaude est de l'ordre de plusieurs heures.

### Exemple 8

### Etude de l'influence de la pression en CO₂ sur l'échange ionique entre l'argile et l'alkylammonium dans le CO₂ supercritique

**Tableau 7**

| Essai n° | Pression (bar) | Distance interfeuillet (Å) | Taux d'échange ionique (%) |
|---|---|---|---|
| 1 | 50 | 18,4 | 93 |
| 2 | 100 | 18,4 | 97 |
| 3 | 200 | 18,4 | 81 |

Les trois essais ont été réalisés conformément au mode opératoire de l'Exemple 6, à 40°C et 200 bars et ce pendant 10 minutes. Pour chacun des trois essais, on mélange intimement 0,84 g de DDDMABr (bromure de didodécyldiméthylammonium) à 2 g de Cloisite® Na⁺ et on soumet alors le mélange au traitement au CO₂ supercritique.

Les résultats obtenus montrent l'existence d'une pression optimale pour réaliser l'échange ionique. Cette observation est toutefois assez difficile à interpréter. Intuitivement, on peut admettre aisément qu'une augmentation de la pression facilite l'incorporation des ammoniums quaternaires entre les feuillets d'argile. Cette hypothèse est d'autant plus plausible qu'une incorporation de molécules au sein d'une matrice hôte s'accompagne d'une diminution du volume du système (ΔV négatif) et doit donc être favorisée par une augmentation de la pression selon la loi des équilibres. Par contre, le phénomène inverse est observé au-delà de 100 bars. Cette évolution étonnante pourrait résulter de l'augmentation de la polarité du CO₂ à haute pression. D'autre part, cette polarité influence l'équilibre ammonium dissous/ammonium adsorbé. Plus le CO₂ est polaire, plus le sel d'ammonium sera soluble dans celui-ci et moins il aura tendance à s'adsorber sur les parois de l'argile ralentissant alors la réaction d'échange.

### Exemple 9

### Etude de l'influence de la quantité d'organomodifiant incorporé à l'argile sur l'espace interfeuillet de l'argile ainsi modifiée dans le CO₂ supercritique

**Tableau 8**

| Essai n° | Quantité de DDDMABr (g) | Distance interfeuillet (Å) | Taux d'échange ionique (%) |
|---|---|---|---|
| 1 | 0,041 | 12,5 | 100 |
| 2 | 0,116 | 12,9 | 100 |
| 3 | 0,84 | 18,4 | 86 |

Les trois essais ont été réalisés conformément au mode opératoire de l'Exemple 6, à 40°C et 200 bars et ce pendant une heure. On a utilisé dans chaque essai 2 g de Cloisite ® Na⁺.

Le Tableau 8 illustre bien l'effet de la quantité d'ammonium échangé avec l'argile sur la distance interfeuillet de celle-ci. Il est important de remarquer que cette distance n'est modifiée sensiblement que lors d'un ajout de sel d'ammonium en quantité proche de la capacité d'échange cationique de l'argile vierge. Cette évolution peut trouver son explication dans une modification de l'orientation des chaînes alkyle portées par les ions ammonium quaternaire lors d'ajouts conséquents de sels d'ammonium. Au départ, ces chaînes ont tendance à se disposer parallèlement au plan des feuillets d'argile, induisant un faible écartement des lamelles. Dès que la couche organique couvre entièrement la surface des feuillets, les chaînes doivent se superposer pour permettre l'incorporation de cations supplémentaires. La position des chaînes alkyle se modifie et celles-ci tendent à adopter une orientation de plus en plus perpendiculaire aux plans des feuillets d'argile. L'écartement maximum entre ceux-ci ne peut donc être obtenu que si la presque totalité des ions alcalins a été déplacée par des ions ammonium.

### Exemple 10

### Modification, dans le CO₂ supercritique, d'argiles vierges par des ammoniums de nature siliconée ou hautement fluorée

Les ammoniums utilisés dans les Exemples 6 à 9 sont en fait des ammoniums hydrophiles, c'est-à-dire des sels d'alkylammonium. Ces ammoniums peuvent également être utilisés lors de la modification de charges d'argile en milieu aqueux, ce qui n'est pas le cas lors de l'utilisation d'ammoniums hydrophobes. En effet, les ammoniums sont alors peu solubles dans le milieu et sont difficilement intégrés et échangés au sein des feuillets de l'argile. Parmi ces ammoniums hydrophobes, les dérivés hautement fluorés, contenant par exemple plus de 4 atomes de fluor sur une au moins des chaînes alkyle portées par le cation ammonium, et les dérivés siliconés occupent une place importante puisque ouvrant de véritables opportunités pour la préparation efficace de nanocomposites de polymères fluorés ou siliconés. On donne ci-après deux exemples de préparation de ces nouvelles argiles dans le CO₂ supercritique, milieu connu comme étant un relativement bon solvant des silicones et dérivés hautement fluorés.

### a) Modification par un ammonium porteur d'un segment de PDMS

Synthèse préalable de l'ammonium siliconé : 10 g de poly(diméthylsiloxane) (PDMS) porteur à ses deux extrémités d'un bout de chaîne amino (-NH₂) (Mn = 850 g/mole) sont dissous dans 50 ml de tétrahydrofuranne (THF) en présence de 3,4 ml d'iodobutane. Le mélange réactionnel est chauffé à 50°C pendant 65 heures. Le rendement de la réaction, mesuré après purification, est de 75 %.
On introduit alors 0,55 g de ce PDMS modifié et 1 g de Cloisite® Na⁺ dans le réacteur et on procède comme rapporté dans l'Exemple 6. L'échange ionique est réalisé à 40°C, pendant 3 heures et sous une pression de 100 bars de CO₂. La distance interfeuillet obtenue est de 16,5 Å et le taux d'échange ionique de 60 %.
La conversion de la Cloisite naturelle (Cloisite Na⁺) en Cloisite organomodifiée est moins élevée que dans les essais rapportés dans les Exemples 6 à 9. Toutefois, ce taux d'échange est suffisant pour induire une importante modification de l'espace interfeuillet.

### b) Modification par un ammonium porteur d'un segment hautement fluoré.

Synthèse préalable de l'ammonium hautement fluoré : On dissout 10 g d'iodotétrahydroperfluorooctane dans 50 ml de THF en présence de 5 ml de triéthylamine. La réaction est réalisée à 50°C pendant 65 heures. L'iodure de tétrahydroperfluorooctyltriéthylammonium est récupéré par évaporation à sec et purifié.
On introduit 0,52 g de l'ammonium fluoré ainsi obtenu et 1 g de Cloisite ® Na⁺ dans le réacteur et on procède comme dans l'Exemple 6. L'échange ionique est réalisé à 40°C pendant 3 heures sous une pression de 100 bars en CO₂ supercritique. La distance interfeuillet obtenue est de 13,1 Å et le taux d'échange ionique de 32 %. Un taux d'échange ionique double est obtenu lorsque la réaction d'échange est menée à 70bars pendant 3 heures.
Comme dans le cas de l'ammonium siliconé, le taux d'échange cationique est peu élevé. Ceci tend à montrer que plus le cation organophile est soluble dans le CO₂ supercritique, plus son incorporation au sein de l'argile est difficile.

### Exemple 11

### Intégration en amont du procédé de modification d'une argile vierge dans le CO₂ supercritique

Plutôt que de partir d'un mélange de sel d'ammonium et d'argile naturelle, cet exemple comme on l'a déjà rapporté précédemment se rapporte à la préparation d'argiles organomodifiées au départ d'une argile vierge et de précurseurs de l'ammonium quaternaire, c'est-à-dire l'amine correspondante et un halogénure d'alkyle adéquat.

Le traitement, résultat d'une étape de synthèse de l'ammonium suivi de son incorporation et échange au sein des feuillets de l'argile naturelle, a été réalisé à 40°C pendant 24 heures sous une pression de 300 bars en CO₂ supercritique en présence de 0,37 ml de bromooctane, de 1,4 ml de tridodécylamine et de 2 g de Cloisite® Na⁺. On procède alors conformément au mode opératoire rapporté dans l'Exemple 6. La distance interfeuillet obtenue est de 20,3 Å et le taux d'échange ionique de 63 %.

Cet exemple montre très clairement que la synthèse de l'agent modifiant et son incorporation dans une argile naturelle est tout à fait réalisable en une seule étape. Il est important de souligner que la vitesse de quaternisation de l'amine en présence d'un halogénure d'alkyle semble plus rapide dans le CO₂ supercritique que dans le THF par exemple. En effet, le rendement de cette réaction est au minimum de 63 % dans le CO₂ supercritique après 24 heures de réaction, alors qu'il atteint une valeur de 75 % après 65 heures à 50°C dans le THF.

Bien que le présent procédé se rapporte à la modification d'argiles non modifiées en général, il convient particulièrement bien à la modification d'argiles naturelles de type montmorillonite. Le principe de cette modification repose en fait sur les excellentes propriétés de transport du CO₂ et en particulier du CO₂ supercritique, permettant une bonne imprégnation de l'espace interfeuillet par les alkylammoniums et facilitant dès lors l'échange ionique à la surface des feuillets de l'argile. Cette modification d'argiles natives dans le CO₂ supercritique les rend ainsi organophiles et de loin plus compatibles avec les matrices polymères, facilitant ainsi leur dispersion et la préparation de nanocomposites présentant une majorité de charges d'argile exfoliée. On notera que ce recours au CO₂ (supercritique) permet également la préparation aisée d'argiles modifiées par des ammoniums porteurs de segments siliconés ou hautement fluorés.

Il doit être entendu que la présente invention n'est en aucune façon limitée aux formes de réalisation décrites ci-dessus et que bien des modifications peuvent être apportées sans sortir du cadre du présent brevet.

## Revendications

1. Procédé de préparation d'une mousse de polyester biodégradable comprenant le mélange du polyester sous forme de masse fondue avec une nanocharge du type argile organomodifiée et la dispersion de celle-ci dans la masse fondue de polyester, et l'expansion de ladite mousse de polyester ainsi obtenue en présence d'un agent moussant de manière à former de la mousse de polyester, **caractérisé en ce qu'**on ajoute à la masse fondue de polyester, un surfactant siliconé conférant à ladite mousse une morphologie poreuse fine, régulière et régulable.

2. Procédé suivant la revendication 1, **caractérisé en ce que** le surfactant siliconé est ajouté simultanément à la nanocharge.

3. Procédé suivant l'une ou l'autre des revendications 1 et 2, **caractérisé en ce que** le surfactant siliconé est composé d'une composante polyester miscible avec la masse fondue de polyester et d'une composante poly(diméthylsiloxane) abaissant la tension de surface entre ladite masse de polyester et l'agent moussant.

4. Procédé suivant la revendication 3, **caractérisé en ce que** le surfactant siliconé est un polymère ou copolymère multiséquencé du type [poly(diméthylsiloxane-b-polyester]ₙ, un copolymère triséquencé du type polyester-b-poly(diméthylsiloxane)-b-polyester ou un mélange de ceux-ci, le symbole b signifiant séquence et n représentant un nombre entier pouvant atteindre la valeur de 1 à 10 et étant avantageusement de 2 à 5.

5. Procédé suivant la revendication 4, **caractérisé en ce que** ledit polymère ou copolymère multiséquencé répond à la structure [poly(s-caprolactone)-b-poly(diméthylsiloxane)]ₙ, dans laquelle n vaut de 2 à 5.

6. Procédé suivant la revendication 4, **caractérisé en ce que** le copolymère triséquencé précité répond à la structure poly(ε-caprolactone)-b-poly(diméthylsiloxane)-b-poly(s-caprolactone).

7. procédé suivant l'une quelconque des revendications 1 à 6, **caractérisé en ce qu'**on utilise comme agent moussant, un fluide supercritique soluble dans la masse fondue de polyester tel que du dioxyde de carbone au-dessus de sa pression critique, ou de l'azote moléculaire.

8. Procédé suivant l'une quelconque des revendications 1 à 6, **caractérisé en ce qu'**on utilise comme agent moussant, un agent porogène, et avantageusement de l'azodicarbonamide, auquel cas est ajouté un accélérateur de décomposition de l'azodicarbonamide, tel que l'oxyde de zinc et/ou le stéarate de zinc.

9. Procédé suivant la revendication 8, **caractérisé en ce que** la nanocharge, l'agent moussant du type azodicarbonamide, l'accélérateur de décomposition et le surfactant siliconé sont ajoutés sous la forme d'un mélange à sec à la masse fondue de polyester précitée.

10. Procédé suivant l'une quelconque des revendications 1 à 9, **caractérisé en ce qu'**on utilise comme nanocharge, une argile organomodifiée par des ions ammonium quaternaire du type N⁺R₁R₂R₃R₄, R₁ à R₄ étant identiques ou différents et représentant de l'hydrogène, un groupe alkyle en C₁-C₂₅ substitué ou non ou un groupe phényle substitué ou non, ou un mélange de telles argiles.

11. Procédé suivant la revendication 10, **caractérisé en ce que** l'argile organomodifiée est une montmorillonite modifiée par des ions ammonium quaternaire dont au moins un des segments (R₁ à R₄) contient au minimum 8 atomes de carbone, de préférence des ions diméthyl suif dihydrogéné ammonium, des ions diméthyl(2-éthylhexyl) suif hydrogéné ammonium ou des ions bis(hydroxyéthylméthyl) suif hydrogéné ammonium, ou un mélange de celles-ci.

12. Procédé suivant la revendication 11, **caractérisé en ce qu'**on utilise en combinaison, comme nanocharge, au moins une des montmorillonites modifiées précitées et, comme surfactant siliconé, un copolymère triséquencé de la structure poly(ε-caprolactone)-b-poly(diméthylsiloxane)-b-poly(ε-caprolactone) ou un copolymère multiséquencé de la structure poly(diméthylsiloxane-b-poly(s-caprolactone)ₙ, dans laquelle n vaut de 2 à 5.

13. Procédé suivant l'une quelconque des revendications 1 à 12, **caractérisé en ce que** la quantité en poids de nanocharge, en pourcentage par rapport au polyester, est d'au plus 15 %, et avantageusement de 1 à 3 %.

14. Procédé suivant l'une quelconque des revendications 1 à 13, **caractérisé en ce que** la quantité en poids de surfactant siliconé en pourcentage par rapport au polyester, est de 0.5 à 10 %, avantageusement de 1,5 à 3 %.

15. Procédé suivant l'une quelconque des revendications 8 à 14, **caractérisé en ce que** la quantité en poids d'agent moussant porogène, en pourcentage par rapport au polyester, est de 5 à 20 %, et avantageusement de 10 à 15%.

16. Procédé suivant l'une quelconque des revendications 8 à 15, **caractérisé en ce que** la quantité en poids d'accélérateur de décomposition, en pourcentage par rapport au polyester, est de 1 à 10 %, et avantageusement de 3 à 5%.

17. Procédé suivant l'une quelconque des revendications 1 à 7, **caractérisé en ce qu'**on utilise comme agent moussant un gaz formé essentiellement de dioxyde de carbone comprimé ou supercritique, que l'on injecte sous pression dans le mélange précité, et on fixe la température du mélange à 40-50°C avant de procéder à une nouvelle élévation de pression entre 100 et 200 bars.

18. Procédé suivant l'une quelconque des revendications 1 à 17, **caractérisé en ce qu'**on utilise comme polyester biodégradable, une poly(lactone), un poly(hydroxybutyrate-co-hydroxyvalérate), un poly(acide lactique), un poly(butylène succinate; adipate; ou téréphtalate), un poly(ester amide), ou un mélange d'au moins deux de ces polyesters.

19. Procédé de modification d'une argile non modifiée, en particulier d'une argile du type montmorillonite, **caractérisé en ce qu'**on mélange intimement l'argile avec un organomodifiant choisi parmi les sels d'ammonium quaternaire, les sels de sulfonium, les sels de phosphonium, les sels d'ammonium siliconé, les sels d'ammonium hautement fluoré, les précurseurs desdits sels et les mélanges d'au moins deux desdits sels, en présence de dioxyde de carbone (CO₂) sous pression.

20. Procédé suivant la revendication 19, **caractérisé en ce que** le CO₂ est à l'état supercritique ou fortement comprimé.

21. Procédé suivant l'une ou l'autre des revendications 19 et 20, **caractérisé en ce que** l'argile et l'organomodifiant sont intimement mélangés avant d'être mis au contact du CO₂ sous pression.

22. Procédé suivant l'une quelconque des revendications 19 à 21, **caractérisé en ce qu'**on utilise comme organomodifiant des sels comprenant des ions ammonium quaternaire du type N⁺R₁R₂R₃R₄, des ions sulfonium de type S⁺R₁R₂R₃, des ions phosphonium de type P⁺R₁R₂R₃R₄, R₁ à R₄ étant identiques ou différents et représentant de l'hydrogène, un groupe alkyle en C₁-C₂₅ substitué ou non ou un groupe phényle substitué ou non, ou un mélange de ces organomodifiants

23. Procédé suivant la revendication 22, **caractérisé en ce que** l'ion ammonium ou phosphonium de l'organomodifiant est porteur d'au moins un segment (R₁ à R₄) contenant au minimum 8 atomes de carbone ou que l'ion sulfonium de l'organomodifiant est porteur d'au moins un segment (R₁ à R₃) contenant au minimum 8 atomes de carbone.

24. Procédé suivant l'une quelconque des revendications 19 à 21, **caractérisé en ce qu'**on utilise comme ammonium siliconé, un poly(diméthylsiloxane) modifié.

25. Procédé suivant l'une quelconque des revendications 19 à 21, **caractérisé en ce qu'**on utilise comme ammonium hautement fluoré, un ammonium contenant au minimum 4 atomes de fluor.

26. Procédé suivant l'une quelconque des revendications 19 à 25, **caractérisé en ce qu'**on utilise comme précurseur d'ammonium quaternaire, une amine et un halogénure d'alkyle.

27. Procédé suivant l'une quelconque des revendications 19 à 25, **caractérisé en ce qu'**on utilise comme précurseur du sel de sulfonium, un thioéther et un époxyde.

28. Procédé suivant l'une quelconque des revendications 19 à 27, **caractérisé en ce que** le CO₂ est sous une pression allant de 50 à 300 bars et à une température de 40 à 50°C, avantageusement d'environ 40°C.

29. Mousse de polyester biodégradable, telle que préparée par le procédé suivant l'une quelconque des revendications 1 à 18, en présence d'une argile éventuellement organomodifiée par le procédé suivant l'une quelconque des revendications 19 à 28, présentant une morphologie poreuse fine, régulière et régulable.

30. Utilisation de la mousse suivant la revendication 29 et/ou telle que préparée par le procédé suivant l'une quelconque des revendications 1 à 18, en présence d'une argile éventuellement organomodifiée par le procédé suivant l'une quelconque des revendications 19 à 28, pour la fabrication de revêtements extérieurs, emballages de boissons et aliments à consommation rapide, bouteilles, couverts jetables, objets thermoformés, fibres, films, mélanges avec amidon, implants médicaux biorésorbables, pots de transplantation en agriculture, marquages et fixations de plantes, plateaux pour soins, biomatériaux, patchs résorbables.
